# EUROPEAN PATENT SPECIFICATION

(11) **EP 0 380 784 B1**
(45) Date of publication and mention of the grant of the patent: **08.06.1994**
(21) Application number: 89122461.0
(22) Date of filing: 06.12.1989
(51) Int. Cl.: B29D 30/06

(54) **Method and apparatus for inserting a green tire in a vulcanizing machine**
Verfahren und Vorrichtung zum Einsetzen eines Reifens in eine Vulkanisiermaschine
Procédé et dispositif pour insérer un pneu cru dans une machine à vulcaniser

(30) Priority: 31.01.1989 JP 19869/89
(43) Date of publication of application: 08.08.1990
(73) Proprietor: MITSUBISHI JUKOGYO KABUSHIKI KAISHA, Tokyo (JP); SUMITOMO RUBBER INDUSTRIES LIMITED, Kobe-shi Hyogo-ken (JP)
(72) Inventor: Katayama, Hideaki Nagasaki Shipyard &Engine Works, Nagasaki-shi Nagasaki-ken (JP); Murakami, Toshifumi Nagasaki Shipyard &Eng. Works, Nagasaki-shi Nagasaki-ken (JP); Hasegawa, Akira Nagasaki Shipyard &Eng. Works, Nagasaki-shi Nagasaki-ken (JP); Sakaguchi, Katsuyoshi Nagasaki Shipyard &Eng.Works, Nagasaki-shi Nagasaki-ken (JP); Soeda, Koji, Kobe-shi Hyogo-ken (JP); Kubota, Yoshiya, Toyota-shi Aichi-ken (JP); Kubota, Akinori, Kobe-shi Hyogo-ken (JP); Ijiri, Masaaki, Aichi-gun Aichi-ken (JP)
(74) Representative: Henkel, Feiler, Hänzel & Partner

(56) References cited:
- FR-A- 2 176 503
- FR-A- 2 329 435
- GB-A- 1 177 617
- US-A- 4 236 883

## Description

### BACKGROUND OF THE INVENTION:

### Field of the Invention:

The present invention relates to a method and an apparatus for expanding bead portions of a green tire and sequentially inserting the upper and lower bead portions into bead rings of upper and lower metal molds before shaping in a tire vulcanizing machine.

### Description of the Prior Art:

The heretofore known apparatus consists of upper and lower metal molds disposed on a vulcanizing machine and adapted to move up and down relatively to each other and a center mechanism disposed in the lower metal mold, and upon precisely centering a green tire with respect to bead ring portions of the upper and lower metal molds, a green tire is transported up to the position of the metal molds by means of a loader, and the green tire is made to sit at an upper metal mold bead ring portion or at a lower metal mold bead ring portion. With such an apparatus in the prior art, only sitting of an upper side or lower side bead portion of the green tire at the bead ring portion of the corresponding metal mold is effected, and the remaining lower side or upper side bead portion of the green tire cannot be made to sit precisely at the bead ring portion of the corresponding metal mold. In addition, if the green tire should have been deformed before it is transported by a loader, as a device for reshaping the bead of that green tire into a true circular shape is not provided, the green tire could not be made to sit precisely at the metal mold bead portion, and it would adversely influence upon uniformity of the tire after vulcanization.

In the prior art, when a green tire is to be loaded in upper and lower molds of a tire vulcanizing machine, by the shaping operation upon vulcanization of a tire, a bladder was pressed against the inside of the green tire with a gas pressure, and the bead portion of the green tire was forcibly pushed into upper and lower bead rings of the metal molds by this bladder.

Therefore, there was a fear that vulcanization of a tire may be carried out without the green tire bead portions being surely inserted into the bead rings of the metal molds.

Another prior art apparatus and method for inserting a green tire in a tire vulcanizing machine is described in FR-A-2 176 503. This known apparatus is provided in a green tire loader and comprises a number of vertically movable chuck like lever arms each having a device attached thereto which is adapted to slide up and down along the lever arms. In order to reach inside the bead of a green tire said lever arms are adapted to swing towards the center with their lower ends. Upon back-movement of the lever arms into their vertical positions the bead of the green tire is rectified and centered, lowered by the down-movement of the levers and forcibly inserted into a lower bead ring of a lower tire mold by means of said devices sliding downward along the levers. Thereafter, the apparatus is retracted from the tire after swinging the lower ends of the levers towards the center of the tire and thus releasing the lower bead.

Like in the prior art cited above, in the apparatus according to FR-A-2 176 503 there is provided no means suitable for also holding and inserting the upper bead of the green tire onto the upper bead ring of the tire mold and therefore there is no possibility to assure that the upper bead is correctly placed upon the upper bead ring when the upper and lower molds are closed for vulcanisation.

### SUMMARY OF THE INVENTION:

It is accordingly the object of the present invention to provide improved method and apparatus for inserting a green tire in a tire vulcanizing machine, in which both the upper and lower bead portions of the green tire can be made to sit precisely at the upper and lower metal mold bead rings in a reliable manner.

According to the present invention, there is provided a method for inserting a green tire in a tire vulcanizing machine, comprising the steps recited in claim 1.

Also according to the present invention, there is provided an apparatus for inserting a green tire in a tire vulcanizing machine, comprising the features of claim 2.

According to a preferred embodiment of the present invention, there is provided the above-featured apparatus for inserting a green tire in a tire vulcanizing machine, wherein the sectors are supported from the chucks via springs so as to be vertically displaceable relative to the chucks.

According to another preferred embodiment of the present invention there is provided the last-featured apparatus for inserting a green tire in a tire vulcanizing machine, which further comprises a chuck opening/closing cylinder, and a linkage connected to the chuck opening/closing cylinder for performing expansion/contraction operations of the aforementioned chucks and sectors.

In more particular, the apparatus according to the present invention has such structure that sectors are respectively mounted to a plurality of chucks adapted to perform expansion/contraction operations in a concentric manner as operated by a cylinder and links, and the sectors can hold a bead portion of a green tire in a true circular shape by their expanding operation. In addition, the sectors are held by the respective chucks in a vertically displaceable manner by means of springs, and an elevator cylinder for raising and lowering the entire assembly of the sectors and chucks, is provided.

The operation of forcibly inserting a green tire into metal mold bead rings is effected in the following manner. That is, when the elevator cylinder rises with the upper bead portion of the green tire held expanded in a true circular shape by means of the sectors, the sectors would strike against the upper portion of the upper metal mold bead ring and would retract, and the bead portion of the green tire would be inserted into the bead ring as pushed by the tip ends of the chucks. Such operation is similarly effected for the lower bead portion of the green tire and the bead ring of the lower metal mold, and as a result of lowering of the elevator cylinder, the lower bead portion of the green tire is inserted into the bead ring of the lower metal mold as pushed by the tip ends of the chucks.

Thus, according to the present invention, upper and lower bead portions of a green tire can be inserted sequentially into the upper metal bead ring and the lower metal mold bead ring, respectively, by means of a single mechanism, and thereby the construction of an apparatus for inserting a green tire in a tire vulcanizing machine can be simplified.

The above-mentioned and other objects, features and advantages of the present invention will become more apparent by reference to the following description of preferred embodiments of the invention taken in conjunction with the accompanying drawings.

### BRIEF DESCRIPTION OF THE DRAWINGS:

In the accompanying drawings:
Fig. 1 is a longitudinal cross-section view of an essential part of one preferred embodiment of the apparatus according to the present invention, taken along line A-A in Fig. 5;
Fig. 2 is a transverse cross-section view taken along line B-B in Fig. 1 as viewed in the direction of arrows;
Fig. 3 is a longitudinal cross-section view similar to Fig. 1 of another preferred embodiment of the apparatus according to the present invention;
Fig. 4 is a transverse cross-section view taken along line C-C in Fig. 3 as viewed in the direction of arrows;
Fig. 5 is a general front view partly-in cross-section of a tire vulcanizing machine;
Fig. 6(a) is a plan view of one sector and a chuck portion;
Fig. 6(b) is a cross-section side view of the portion shown in Fig. 6(a);
Fig. 7(a) is an enlarged cross-section view showing the state where an upper bead has been forcibly inserted in an upper bead ring;
Fig. 7(b) is an enlarged cross-section view showing the state where a lower bead has been forcibly inserted into a lower bead ring; and
Figs. 8-1 through 8-7 are schematic partial cross-section views showing the successive steps of the operation of a bead lock mechanism.

### DESCRIPTION OF THE PREFERRED EMBODIMENTS:

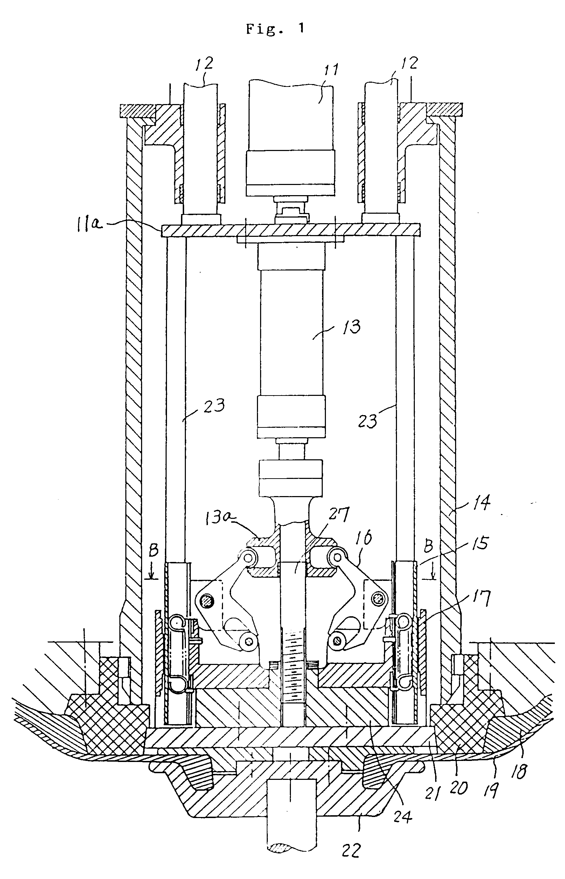

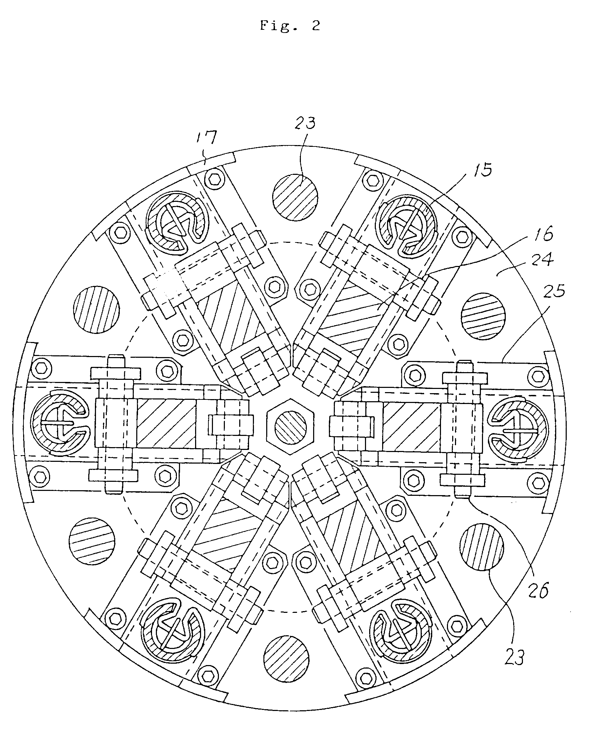

Referring now to Figs. 1 through 8, reference numeral 1 designates hydraulic cylinders, numeral 2 designates a main body frame, numeral 3 designates a pressing hydraulic cylinder, numeral 4 designates a pressing column, numeral 5 designates guide brackets, numeral 6 designates a bolster plate, numeral 7 designates a heat plate, numeral 8 designates a tire metal mold, numeral 9 designates a center mechanism, numeral 10 designates installation stands, numeral 11 designates a bead rock elevator cylinder, numeral 12 designates guide rods, numeral 13 designates a chuck opening/closing cylinder, numeral 14 designates an outer tube, numeral 15 designates sectors, numerals 16 and 16′ designate links, numerals 17 and 17′ designate chucks, numeral 18 designates a vulcanized tire, numeral 19 designates a bladder, numeral 20 designates an upper bead ring, numeral 20a designates an upper bead, numeral 21 designates an inner pressure reaction force receiver plate, numeral 22 designates a center post, numeral 23 designates tie rods, numerals 24 and 24′ designate guide plates, numerals 25 and 25′ designate guide brackets, numeral 26 designates pins, numeral 27 designates a stopper bolt, numeral 28 designates an intermediate slide plate, numeral 29 designates spring suspender metals, numeral 30 designates springs, numeral 31 designates a green tire, numeral 32 designates a lower bead ring, and numeral 32a designates a lower bead.

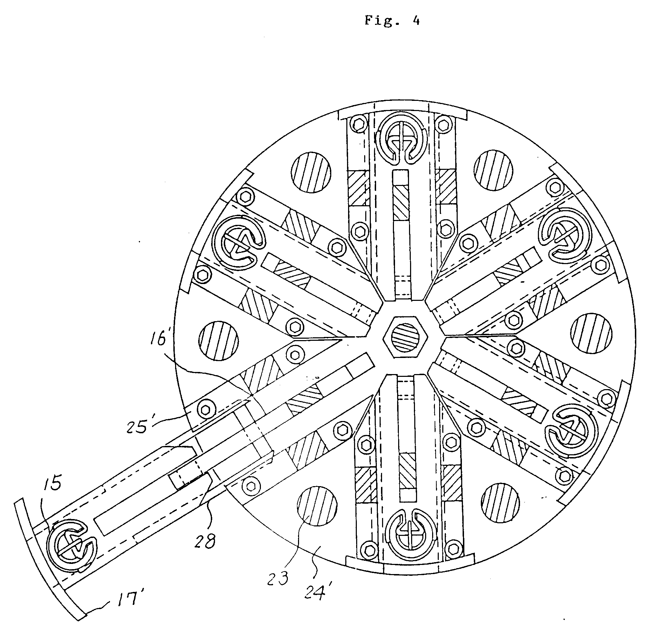

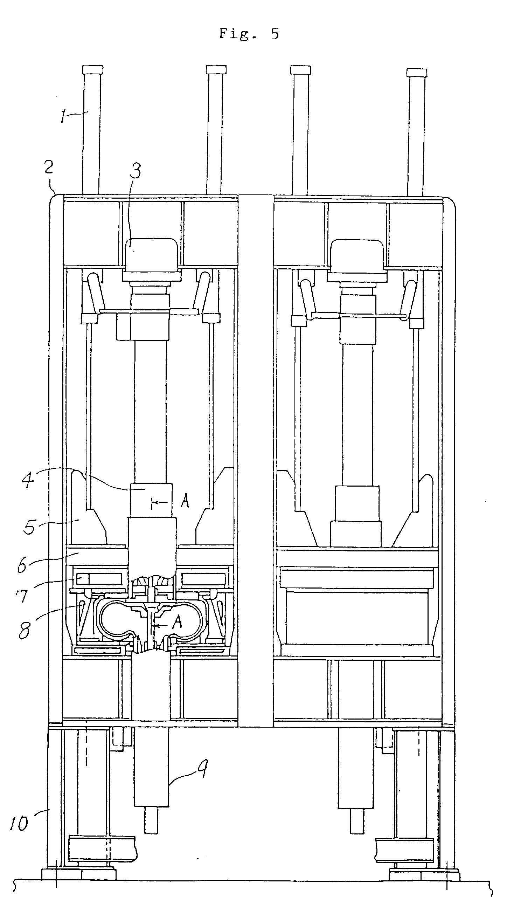

In the general front view shown in Fig. 5, a hydraulic vulcanizing machine has its main body frame 2 placed on the installation stands 10, and the bolster plate 6 in the machine is raised and lowered by means of the two hydraulic cylinders 1. To this bolster plate 6 are fixedly secured the heat plate 7 and the metal mold 8. Upon rising and lowering of the bolster plate 6, it can repeat rise and fall vertically as guided by the guide brackets 5 along rails mounted to the frame 2. Vulcanization of a green tire is effected by pressing the pressing column 4 fixed to the bolster plate 6 at its center by means of the single pressing hydraulic cylinder 3, and carrying out heating and pressing within the bladder 19 mounted to the lower centering mechanism 9.

Fig. 1 is a cross-section view taken along line A-A in Fig. 5, and this shows a bead lock mechanism assembled within the pressing column 4. The outer tube 14 is fixed to the pressing column 4, and the elevator cylinder 11 is mounted within the pressing column 4. The guide rods 12 effect guide upon rising and lowering of the elevator cylinder 11, and the guide plate 24 is supported by the elevator cylinder 11 and the six tie rods 23 mounted to a plate 11a at the bottoms of the guide rods 12.

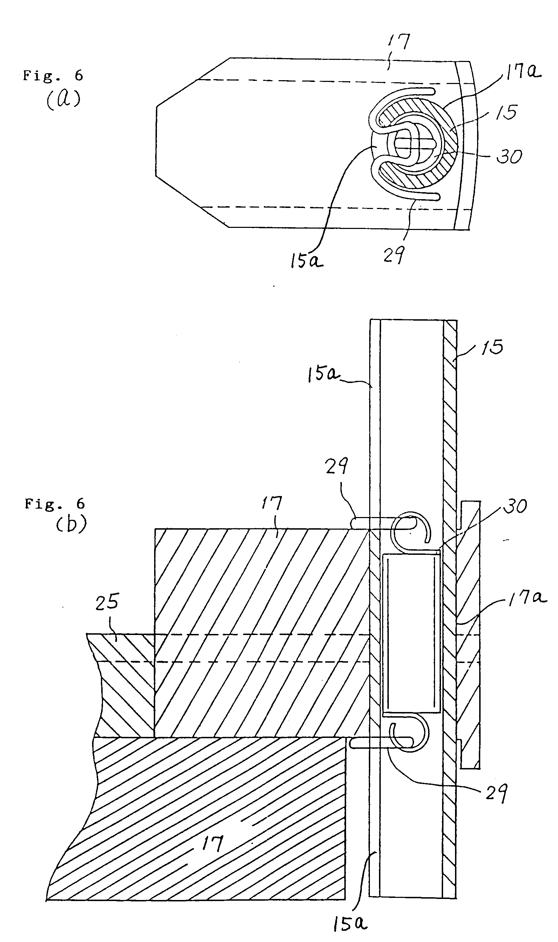

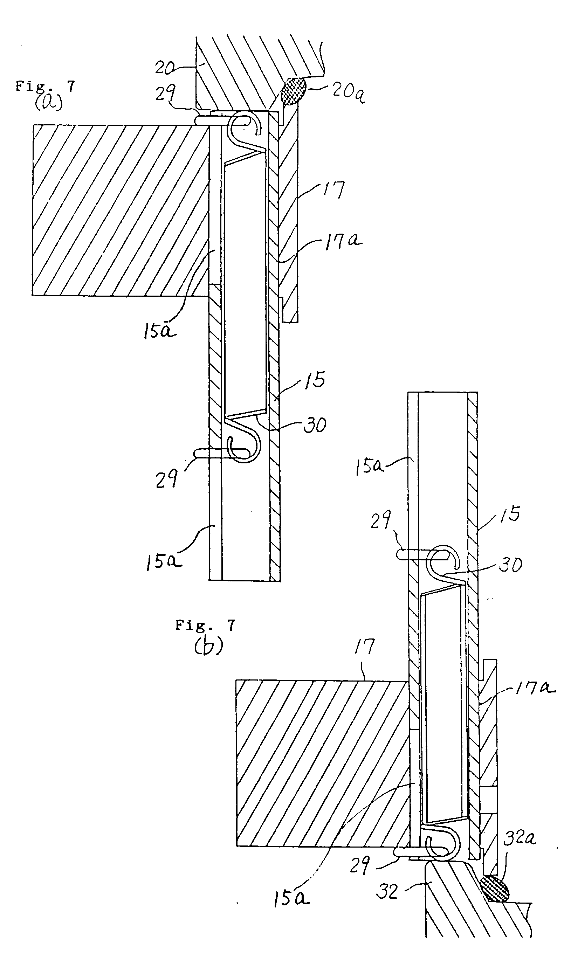

Each of the chucks 17 supported on the guide plate 24 holds the hollow sector 15 slidably inserted in a through-hole 17a directed in the vertical direction in the chuck 17 with the aid of the spring 30 provided within the same sector 15 as shown in Figs. 6 and 7, and it can slide on the guide plate 24. This slide movement is effected by the chuck opening/closing cylinder 13 via the link 16, and results in opening or closing of the chucks 17. At this moment, the adjustment of the extent of opening of the chucks 17 is effected by changing the position of the inner pressure reaction force receiver plate 21 mounted to the slide plate 24 by adjusting the length of the stopper bolt 27. The above-mentioned spring 30 has its opposite ends mounted to the spring suspender metals 29, 29 inserted in slots 15a, 15a formed in the upper and lower portions, respectively, of the sector 15, and these spring suspender metals 29, 29 are adapted to be brought into contact with the upper and lower surfaces of the chuck 17 (See Figs. 6 and 7.).

Fig. 1 shows a tire vulcanizing state, in which the bladder 19 is positioned inside of the vulcanized tire 18, the bladder 19 is held by the center post 22 of the center mechanism 9, and on the outside of the vulcanized tire 18 is present the tire metal mold 8.

Fig. 2 shows the cross-section taken along line B-B in Fig. 2.

In this figure, on the guide plate 24 are provided 6 sets of chucks 17 and sectors 15 as arrayed radially at equal angular intervals, and a center of rotation of an L-shaped link 16 is held via a pin 26 by the guide bracket 25 fixedly secured to the guide plate 24. As shown in Fig. 1, one end of this link 16 is slidably inserted into in a link receiver 13a at the bottom of the chuck opening/closing cylinder 13, and the other end of the link 16 is forked to be engaged with a pin 40 provided on the chuck 17, as shown in Fig. 1.

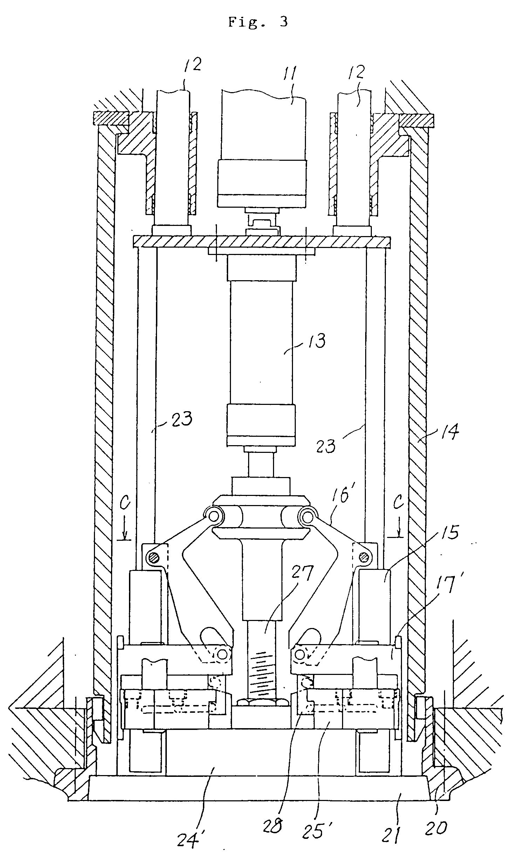

The modified embodiment shown in Fig. 3 is almost similar to the first embodiment shown in Fig. 1, but in this embodiment an intermediate slide plate 28 is additionally provided in order to enlarge the size of expansion of the chucks 17', and as a result the links 16' corresponding to the links 16 are large-sized.

Fig. 4 shows a transverse cross-section taken along line C-C in Fig. 3.

While Fig. 4 is almost similar to Fig. 2, owing to the presence of the intermediate slide plate 28, even if the block of the chuck 17′ should come outside of the slide plate 24′, it would be held by the intermediate slide plate 28. Accordingly, the stroke of opening/closing of the chuck 17′ becomes large, and the apparatus can be adapted to a wide range of variation in size of tires.

Figs. 6(a) and 6(b) show the details of the part of the sector 15 held by the chuck 17. The sector 15 is held at a neutral position with respect to the chuck 17 by means of the spring 30 mounted to two spring suspender metals 29, 29 at the above and at the below which are held in contact with the upper and lower surfaces, respectively, of the chuck 17.

Here the actions of the sector 15 and the spring 30 will be described with reference to Figs. 7(a) and 7(b).

When the bead lock elevator cylinder 11 rises, the chuck 17 and the sector 15 would also rise, and the top end of the sector 15 would come into contact with the lower surface of the upper bead ring 20. Upon this rise, the upper bead 20a of the green tire 31 is held by the sector 15 as will be described later. When the bead lock elevator cylinder rises further, the sector 15 does not rise, but the chuck 17 rises while stretching the spring 30, hence the upper bead 20a of the green tire 31 is pushed up by the chuck 17, and thus the upper bead 20a is pushed into the upper bead ring 20. Likewise, the lower bead 32a of the green tire 31 is also inserted into the lower bead ring 32 by lowering of the bead lock elevator cylinder 11.

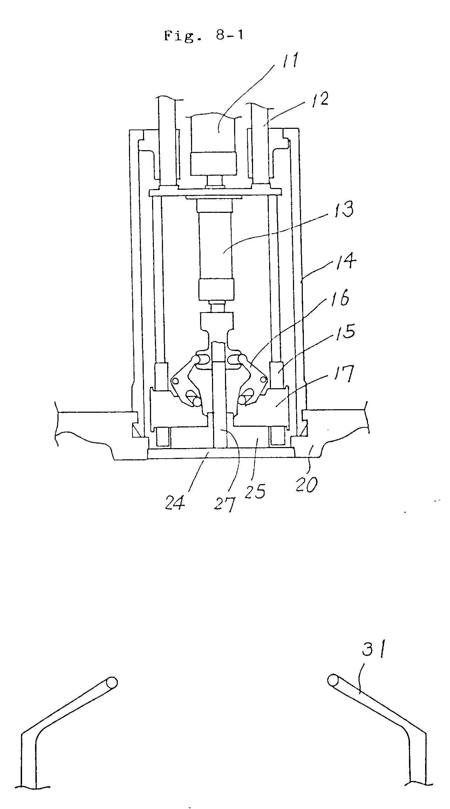

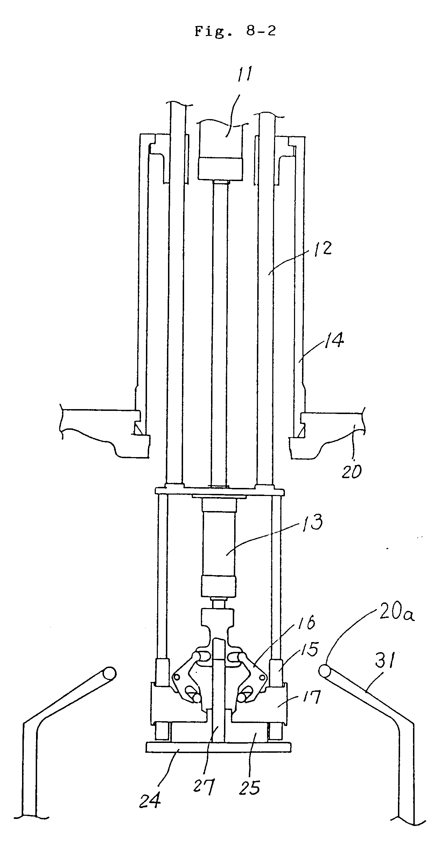

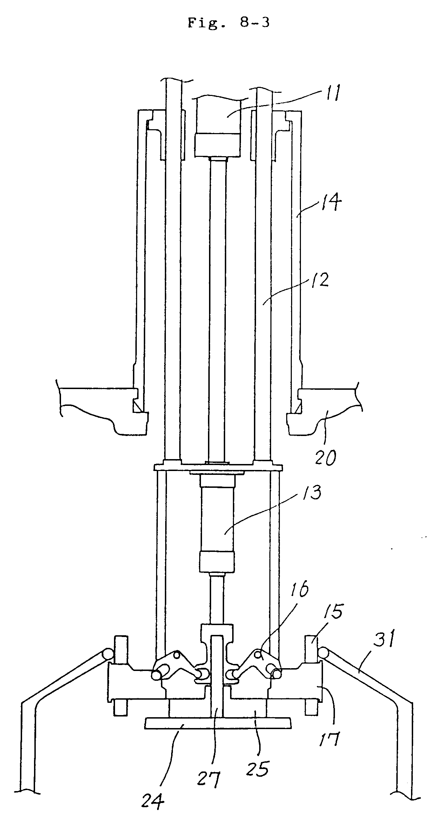

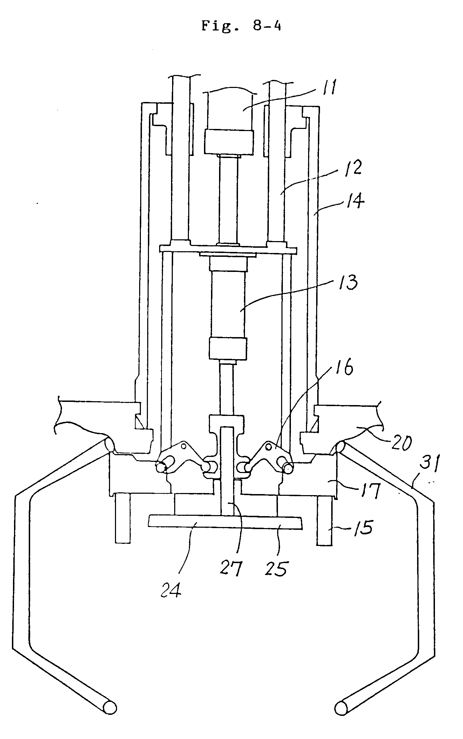

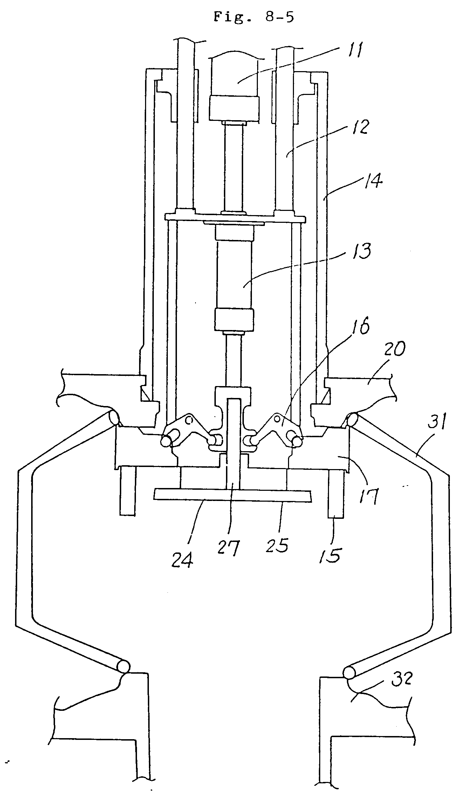

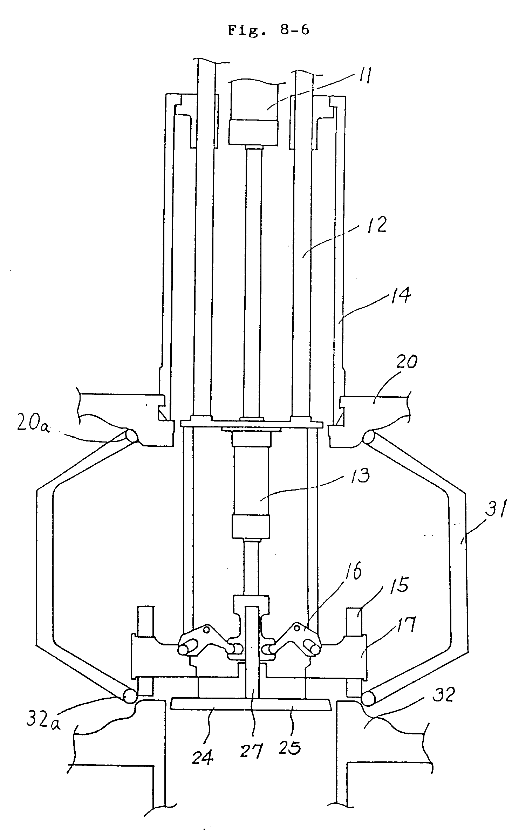

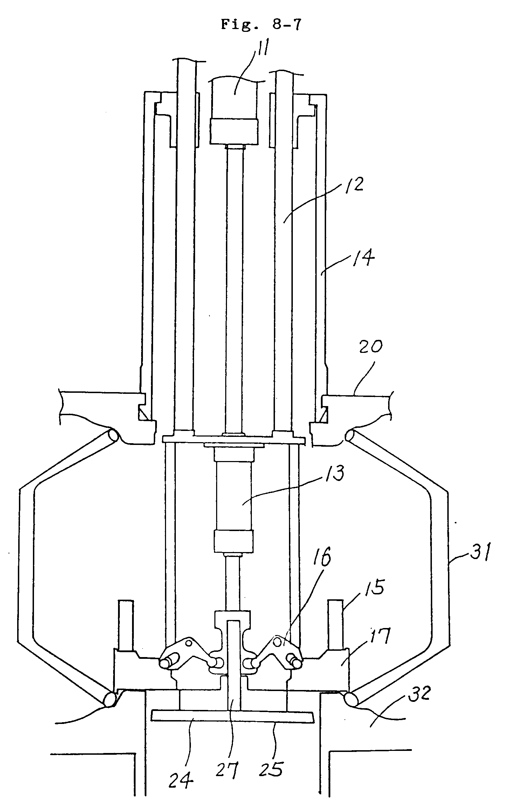

The successive steps of the operation of the bead lock mechanism are shown in Figs. 8-1 through 8-7, respectively.

Fig. 8-1 shows the state where the green tire 31 has been carried in up to the position right under the bead lock mechanism by means of an externally seizing loader not shown, and in this state the chucks 17 have been contracted and they have been pulled up by the bead lock elevator cylinder 11 and accommodated within the outer tube 14.

Fig. 8-2 shows the state where the chucks 17 and the sectors 15 have been lowered by the bead lock elevator cylinder 11 up to the position where the level of the sectors 15 coincides with the level of the upper bead 20a of the green tire 31 carried in by the externally seizing loader, and have been stopped there.

Fig. 8-3 shows the state where the 6 sets of chucks 17 and sectors 15 have been expanded by the downward opening operation of the chuck opening/closing cylinder 13 and the links 16, and the upper bead 20a of the green tire 31 has been expanded into a true circular shape and held by the outside of the sectors 15.

Fig. 8-4 shows the state where the true circular upper bead 20a of the green tire 31 held in the state shown in Fig. 8-3 was pulled up by the bead lock elevator cylinder 11 and has been inserted into the upper bead ring 20 by the tip ends of the chucks 17. In this way, the upper bead 20a of the green tire 31 can be surely set in the upper bead ring 20.

Fig. 8-5 shows the state where while the upper bead 20a of the green tire 31 is kept inserted in the upper bead ring 20, the lower bead 32a of the green tire 31 has butted against the lower bead ring 32 as a result of lowering of the press elevator cylinder 1 shown in Fig. 5 and the lowering of the press elevator cylinder 1 has stopped there.

Fig. 8-6 shows the state where after stoppage of the lowering of the press elevator cylinder 1, the bead lock mechanism was lowered by the bead lock elevator cylinder 11, and after a contraction operation of the chucks 17 was carried out once in the midst of the lowering, the lowering of the bead lock elevator cylinder 11 has stopped at the position where the sectors 15 come the position above the lower bead ring 32. At this position, the lower bead 32a of the green tire 31 is expanded into a true circular shape by the sectors 15 under the chucks 17. This expanding operation is similar to that described previously with reference to Fig. 8-3.

Fig. 8-7 shows the state where under the expanded condition of the chucks 17, the lower bead 32a of the green tire 31 is being pushed into the lower bead ring 32 by the tip ends of the chucks 17 as a result of lowering of the bead lock elevator cylinder 11. After this operation, rise of the bead lock elevator cylinder 11 and closing of the chucks 17 are carried out, thus the state shown in Fig. 8-1 is recovered, where the bead lock mechanism is accommodated within the outer tube 14.

After the upper and lower beads 20a and 32a of the green tire 31 have been surely inserted into the upper and lower bead rings 20 and 32, respectively, in the above-described manner, shaping and vulcanization of the green tire are carried out.

Owing to the provision of a plurality of sectors for expanding into a true circular shape and holding a bead portion of a green tire, slide and linkage means for performing expansion/contraction operations of the sectors, and vertically movable chucks for inserting the bead portion of the green tire expanded and held by the sectors into a bead ring of a tire metal mold, the method and apparatus for inserting a green tire in a tire vulcanizing machine according to the present invention provides the following advantages.

That is, thanks to the fact that vulcanization of a green tire is carried out after the upper and lower beads of the green tire have been mechanically surely inserted into the upper and lower bead rings of the metal mold, quality of vulcanized tires can be improved. In addition, as a result of the fact that the upper and lower beads of a green tire are sequentially inserted into the upper bead ring and into the lower bead ring by means of a single mechanism, the construction of the apparatus can be simplified.

Since many changes and modifications can be made to the above-described construction without departing from the scope of the appended claims, all matter contained in the above description and illustrated in the accompanying drawings shall be interpreted to be illustrative and not in a limiting sense.

## Claims

1. A method for inserting a green tire (31) in a tire vulcanizing machine, comprising the steps of expanding into a circular shape and holding a bead portion (20a, 32a) on one side of the green tire (31) by means of radially expansible and contractible chucks (17, 17') each having a sector (15) mounted thereto, then inserting said bead portion (20a, 32a) in parallel to a bead ring (20, 32) of one tire metal mold on one side by means of said chucks (17, 17') constructed to be vertically movable, and subsequently repeating said expanding/holding step and said inserting step for the bead portion (32a, 20a) on the other side of said green tire (31) and the other tire metal mold on the other side by means of said sectors (15) and said chucks (17, 17').

2. An apparatus for inserting a green tire (31) in a tire vulcanizing machine, comprising a plurality of vertically movable chucks (17,17') each having a sector (15) mounted thereto, for holding a bead portion (20a,32a) of the green tire (31) and for inserting the bead portion (20a,32a) of the green tire (31) into a bead ring (20,32) of a tire mold (8),
characterized in that
said chucks (17,17') together with said sectors (15) radially expand into a circular shape, expansion/contraction operations of said chucks (17,17') are performed by slide and linkage means (16,16'), and said bead portion (20a,32a) of the green tire (31) is inserted into the bead ring (20,32) of the tire mold expanded and held by said sectors (15).

3. An apparatus for inserting a green tire (31) in a tire vulcanizing machine as claimed in claim 2, characterized in that said sectors (15) are supported from said chucks (17, 17') via springs (30) so as to be vertically displaceable relative to said chucks (17, 17').

4. An apparatus for inserting a green tire (31) into a tire vulcanizing machine as claimed in claim 3, characterized by further comprising a chuck opening/closing cylinder (13), and a linkage (16, 16') connected to said chuck opening/closing cylinder (13) for performing expansion/contraction operations of said chucks (17, 17') and said sectors (15).

## Patentansprüche

1. Verfahren zum Einsetzen eines Rohreifens (31) in eine Reifenvulkanisiermaschine, umfassend die folgenden Schritte: Aufweiten eines Wulstteils (20a, 32a) an einer Seite des Rohreifens (31) auf eine Kreisform und Halten des Wulstteils (in dieser Form) mittels radial expandierbarer und kontrahierbarer Backen (17, 17') mit jeweils einem daran montierten Kreis-Segment (15); anschließendes Einsetzen des Wulstteils (20a, 32a) parallel zu einem Wulstring (20, 32) eines Metall-Reifenformteils mittels der lotrecht verschiebbar ausgeführten Backen (17, 17'); und hierauf folgendes Wiederholen des Aufweit/Halteschritts und des Einsetzschritts am Wulstteil (32a, 20a) an der anderen Seite des Rohreifens (31) und an dem auf der anderen Seite befindlichen anderen Metall-Reifenformteil mittels der Segmente (15) und der Backen (17, 17').

2. Vorrichtung zum Einsetzen eines Rohreifens (31) in eine Reifenvulkanisiermaschine, umfassend:
eine Anzahl von lotrecht verschiebbaren Backen (17, 17') mit jeweils einem daran montierten Kreis-Segment (15) zum (Fest-)Halten eines Wulstteils (20a, 32a) des Rohreifens (31) und zum Einsetzen des Wulstteils (20a, 32a) des Rohreifens (31) in einen Wulstring (20, 32) eines Reifenformteils (8),
dadurch gekennzeichnet, daß
die Backen (17, 17') zusammen mit den Segmenten (15) radial in eine Kreisform aufweitbar bzw. expandierbar sind, Expandier/Kontrahiervorgänge der Backen (17, 17') mittels Gleit- und Lenkermitteln (16, 16') durchführbar sind und der Wulstteil (20a, 32a) des Rohreifens (31) in dem durch die Segmente (15) aufgeweiteten und gehaltenen Zustand in den Wulstring (20, 32) des Reifenformteils eingesetzt wird.

3. Vorrichtung zum Einsetzen eines Rohreifens (31) in eine Reifenvulkanisiermaschine nach Anspruch 2, dadurch gekennzeichnet, daß die Segmente (15) von den (durch die) Backen (17, 17') über Federn (30) getragen werden bzw. gehaltert sind, so daß sie relativ zu den Backen (17, 17') lotrecht verschiebbar sind.

4. Vorrichtung zum Einsetzen eines Rohreifens (31) in eine Reifenvulkanisiermaschine nach Anspruch 3, ferner gekennzeichnet durch einen Backen-Öffnungs/Schließzylinder (13) und eine mit letzterem verbundene Lenkereinrichtung (16, 16') zur Durchführung der Expandier/Kontrahiervorgänge der Backen (17, 17') und der Segmente (15).

## Revendications

1. Procédé pour insérer un pneumatique (31) à l'état cru dans une machine de vulcanisation de pneumatique, comprenant les étapes consistant à dilater sous une forme circulaire et à maintenir une partie talon (20a, 32a) sur un des côtés du pneumatique (31) à l'état cru au moyen de mors (17, 17') radialement expansibles et contractables comportant chacun un secteur (15) qui y est monté, puis à insérer ladite partie talon (20a, 32a) parallèlement à un anneau (20, 32) de talon d'un moule métallique pour pneumatique sur un des côtés au moyen desdits mors (17, 17') réalisés de manière à pouvoir être déplacés verticalement, et, ensuite, à repéter ladite étape de dilatation/maintien et ladite étape d'insertion de la partie-talon (32a, 20a) sur l'autre côté du pneumatique (31) à l'état cru et sur l'autre moule métallique pour pneumatique se trouvant sur l'autre côté au moyen desdits secteurs (15) et desdits mors (17, 17').

2. Appareil pour insérer un pneumatique (31) à l'état cru dans une machine de vulcanisation de pneumatique, comprenant une pluralité de mors (17, 17') mobiles verticalement, comportant chacun un secteur (15) qui y est monté, pour maintenir une partie talon (20a, 32a) du pneumatique (31) à l'état cru et pour insérer la partie talon (20a, 32a) du pneumatique (31) à l'état cru dans un anneau (20, 32) de talon d'un moule (8) pour pneumatique, caractérisé en ce que lesdits mors (17, 17') conjointement avec lesdits secteurs (15) se dilatent radialement en prenant une forme circulaire, les opérations d'expansion/contraction desdits mors (17, 17') sont effectuées par des moyens à coulisseau et tringlerie (16, 16') et ladite partie talon (20a, 32a) du pneumatique (31) à l'état cru est insérée dans l'anneau (20, 32) de talon du moule pour pneumatique qui est dilaté et maintenu par lesdits secteurs (15).

3. Appareil pour insérer un pneumatique (31) a l'état cru dans une machine de vulcanisation de pneumatique selon la revendication 2, caractérisé en ce que lesdits secteurs (15) sont supportés à partir desdits mors (17, 17') par l'intermédiaire des ressorts (30) de manière à pouvoir être déplacés verticalement par rapport auxdits mors (17, 17').

4. Appareil pour insérer un pneumatique (31) à l'état cru dans une machine de vulcanisation de pneumatique selon la revendication 3, caractérisé par le fait qu'il comprend, en outre, un vérin (13) d'ouverture/fermeture de mors, et une tringlerie (16, 16') reliée audit vérin (13) d'ouverture/fermeture de mors afin d'effectuer des opérations d'expansion/contraction desdits mors (17, 17') et desdits secteurs (15).
